Europäisches Patentamt

European Patent Office

Office européen des brevets

(19)

(11) Veröffentlichungsnummer: **0 265 781**
B1

(12) # EUROPÄISCHE PATENTSCHRIFT

(45) Veröffentlichungstag der Patentschrift:
22.11.90

(21) Anmeldenummer: **87115069.4**

(22) Anmeldetag: **15.10.87**

(51) Int. Cl.⁵: **C08G 18/76,** C08G 18/48
// C08G18/66

(54) Verfahren zur Herstellung von Polyurethanformkörpern.

(30) Priorität: **28.10.86 DE 3636604**

(43) Veröffentlichungstag der Anmeldung:
04.05.88 Patentblatt 88/18

(45) Bekanntmachung des Hinweises auf die Patenterteilung:
22.11.90 Patentblatt 90/47

(84) Benannte Vertragsstaaten:
BE DE ES FR GB IT NL SE

(56) Entgegenhaltungen:
EP-A- 0 093 336
EP-A- 0 096 231
DE-A- 1 694 138
DE-A- 2 400 254
DE-A- 2 622 951
DE-A- 3 405 679

Die Akte enthält technische Angaben, die nach dem
Eingang der Anmeldung eingereicht wurden und die
nicht in dieser Patentschrift enthalten sind.

(73) Patentinhaber: **BAYER AG,
D-5090 Leverkusen 1 Bayerwerk(DE)**

(72) Erfinder: **Neuhaus, Alfred, Habichtgasse 2,
D-5090 Leverkusen 1(DE)**
Erfinder: **Ganster, Otto, Dr., Droste-Hülshoff-Strasse 5,
D-5068 Odenthal(DE)**
Erfinder: **Luckas, Bruno, Petersbergstrasse 4,
D-5090 Leverkusen 1(DE)**

**Beschreibung**

Die vorliegende Erfindung betrifft ein neues Verfahren zur Herstellung von Polyurethanformkörpern des Dichtebereichs 0,8 bis 1,4 g/cm³ und eines Biege-E-Moduls gemäß DIN 53 457 von mindestens 1800 N/mm² durch Umsetzung von ausgewählten organischen Polyisocyanaten mit ausgewählten Verbindungen mit gegenüber Isocyanatgruppen reaktionsfähigen Gruppen nach der Reaktionsspritzgußtechnik.

Die Herstellung von Formkörpern nach dem Isocyanat-Polyadditionsverfahren ist grundsätzlich bekannt.

So beschreibt beispielsweise die DE-PS 1 694 138 ein Verfahren zur Herstellung von harten Polyurethan-Formteilen mit integraler Dichteverteilung. Diese Formteile besitzen wegen ihrer Integralstruktur sehr gute mechanische Eigenschaften allerdings mit der Einschränkung, daß ihre Schlagzähigkeit nicht allen Anforderungen der Praxis genügt.

Elastomere Polyurethan-Formkörper, wie sie beispielsweise gemäß DE-OS 2 622 951 bzw. gemäß DE-OS 3 147 736 zugänglich sind, weisen zwar eine hohe Schlagfestigkeit auf, jedoch sind die in diesen Veröffentlichungen beschriebenen Verfahren nicht geeignet, Formkörper mit einem über 1000 N/mm² liegenden Biege-E-Modul gemäß DIN 53 457 herzustellen.

Gemäß DE-OS 3 405 679 sind zwar Formkörper mit einem sehr hohen Biege-E-Modul zugänglich, jedoch müssen beim Verfahren dieser Veröffentlichung vergleichsweise hochviskose Polyesterpolyole mitverwendet werden, ein Umstand, der die sichere Verarbeitbarkeit der zum Einsatz gelangenden Polyolgemische stark beeinträchtigt.

Es war daher die der Erfindung zugrundeliegende Aufgabe, eine neues Verfahren zur Herstellung von Polyurethan-Formkörpern nach der Reaktionsspritzgußtechnik zur Verfügung zu stellen, welches nicht mit den genannten Nachteilen der Verfahren des Standes der Technik behaftet ist, und welches die Herstellung von schlagzähen Formkörpern des Dichtebereichs 0,8 bis 1,4 g/cm³ und eines Biege-E-Moduls gemäß DIN 53 457 von mindestens 1800 N/mm² gestattet.

Diese Aufgabe konnte mit der Bereitstellung des nachstehend näher beschriebenen erfindungsgemäßen Verfahrens gelöst werden.

Gegenstand der·Erfindung ist ein Verfahren zur Herstellung von schlagzähen Polyurethan-Formkörpern des Dichtebereichs 0,8 bis 1,4 g/cm³ und eines Biege-E-Moduls gemäß DIN 53 457 von mindestens 1800 N/mm² durch Umsetzung nach der Reaktionsspritzgußtechnik von

a) Di- und/oder Polyisocyanaten der Diphenylmethanreihe
mit
b) Polyetherpolyolen des Molekulargewichtsbereichs 500 bis 999,
c) organischen Polyhydroxylverbindungen mit einem Molekulargewicht von maximal 499
und gegebenenfalls
d) Polyethern mit mindestens zwei gegenüber Isocyanatgruppen reaktionsfähigen Gruppen des Molekulargewichtsbereichs 1000 bis 10 000 und/oder
e) aromatischen Diaminen eines unter 500 liegenden Molekulargewichts
in Gegenwart von
f) die Isocyanat-Additionsreaktion beschleunigenden Katalysatoren und gegebenenfalls in Gegenwart von
g) den aus der Polyurethanchemie bekannten Hilfs- und Zusatzstoffen,
dadurch gekennzeichnet, daß man
i) als Komponente b) solche Polyetherpolyole verwendet, die mindestens 30 Gew.-% an in Polyetherketten eingebaut vorliegenden Ethylenoxideinheiten aufweisen,
(ii) als Komponente c) solche Polyhydroxylverbindungen verwendet, die aus der Gruppe bestehend aus Glycerin, Trimethylolpropan, Hexantriol-(1,2,6), Trimethylolethan, Pentaerythrit, Chinit, Mannit, Sorbit, Additionsprodukten dieser Verbindungen mit Propylenoxid und/oder Ethylenoxid und Propylenoxid- und/oder Ethylenoxidaddukten an Ammoniak oder Amine ausgewählt worden sind,
(iii) die Komponente d) in einer Menge von 0 bis 40 Gew.-%, bezogen auf das Gewicht der Komponenten b) bis d), verwendet und
(iv) die Art und Mengenverhältnisse der Komponenten b) bis e) im übrigen so wählt, daß die mittlere Hydroxylzahl des aus diesen Komponenten gebildeten Gemischs größer als 300 ist.

Bei den Ausgangskomponenten a) handelt es sich um bei Raumtemperatur flüssige Di- und/oder Polyisocyanate der Diphenylmethanreihe. Hierzu gehören die bei Raumtemperatur flüssigen Derivate des 4,4'-Diisocyanatodiphenylmethans, beispielsweise die Urethangruppen aufweisenden Polyisocyanate, die gemäß DE-PS 1 618 380 durch Umsetzung von 1 Mol 4,4'-Diisocyanatodiphenylmethan mit 0,05 bis 0,3 Mol an niedermolekularen Diolen oder Triolen, vorzugsweise Polypropylenglykolen mit einem unter 700 liegenden Molekulargewicht zugänglich sind, Carbodiimid- und/oder Uretonimingruppen aufweisende Diisocyanate auf Basis von 4,4'-Diisocyanatodiphenylmethan wie sie beispielsweise gemäß US-PS 3 152 162, 3 384 653, 3 449 256, DE-OS 2 537 685 oder EP-A-5233 zugänglich sind. Ebenfalls gut geeignet sind bei Raumtemperatur flüssige und gegebenenfalls entsprechend modifizierte Gemische von 4,4'-Diisocyanatodiphenylmethan mit 2,4'- und gegebenenfalls 2,2'-Diisocyanatodiphenylmethan. Gut geeignet sind auch bei Raumtemperatur flüssige Polyisocyanatgemische der Diphenylmethanreihe, die neben den genannten Isomeren deren höhere Homologe enthalten, und die in an sich bekannter Weise durch Phosgenierung von Anilin/Formaldehyd-Kondensaten zugänglich sind. Auch Urethan- und/oder Carbodiimidgruppen aufweisende Modifizierungsprodukte dieser Polyisocyanatgemische sind geeignet. Gut geeignet sind auch Umsetzungsprodukte derartiger Di- und/oder Polyisocyanate mit als interne Trennmittel wirkenden Fettsäureestern, wie sie beispielsweise in DE-OS 2 319 648 beschrieben sind. Auch Allophanat- bzw. Biuretgruppen aufweisende Modifizierungsprodukte der genannten Di- und Polyisocyanate sind als Komponente a) geeignet. Die Polyisocyanatkomponente a) weist im allgemeinen eine mittlere NCO-Funktionalität von 2 bis 2,6, vorzugsweise 2,1 bis 2,5 auf.

Bei der Komponente b) handelt es sich um Polyetherpolyole bzw. Gemische von Polyetherpolyolen eines (mittleren), aus dem Hydroxygehalt und der Funktionalität berechenbaren Molekulargewichts von 500 bis 999. Es handelt sich um Polyetherpolyole, die durch an sich bekannte Alkoxylierung von geeigneten Startermolekülen wie Wasser, Ethylenglykol, Propylenglykol, Pentaerythrit, Trimethylolpropan, Glycerin, 4,4'-Dihydroxydiphenylpropan-(2,2), 1,4-Dihydroxybenzol, Ethylendiamin, 4,4'-, 2,4'-und/oder 2,2'-Diaminodiphenylmethan, 2,4-, 2,3- oder 2,6-Diaminotoluol oder beliebige Gemische derartiger Startermoleküle erhältlich sind. Wesentlicher Punkt ist, daß in den Polyetherpolyolen mindestens 30 Gew.-%, vorzugsweise mindestens 40 Gew.-% an innerhalb von Polyetherketten eingebauten Ethylenoxideinheiten vorliegen. Diese Ethylenoxideinheiten können sowohl in der Kette als auch endständig angeordnet sein. Neben diesen Ethylenoxideinheiten können in den Polyetherpolyolen b) insbesondere Propylenoxid- und/oder Butylenoxid-Einheiten vorliegen. Besonders bevorzugt handelt es sich bei der Komponente b) um solche Polyetherpolyole, die unter ausschließlicher Verwendung von Ethylenoxid als Alkylenoxid bei der Alkoxylierungsreaktion erhalten worden sind.

Bei der Komponente c) handelt es sich um als Vernetzer wirkende, niedermolekulare Polyole des Molekulargewichtsbereichs 62 bis 499 der bereits obengenannten Art, wobei die Additionsprodukte der genannten Startermoleküle mit Propylenoxid und/oder Ethylenoxid ebenfalls ein maximales Molekulargewicht von 499 aufweisen, und wobei im Falle der Verwendung von Aminen als Startermoleküle insbesondere Ethylendiamin, 4,4'-, 2,4'- und 2,2'-Diaminodiphenylmethan oder 2,4-, 2,6- und 2,3-Diaminotoluol in Betracht kommen.

Bei der gegebenenfalls mitzuverwendenden Komponente d) handelt es sich um vergleichsweise höhermolekulare Polyether der aus der Polyurethanchemie an sich bekannten Art, die mindestens zwei gegenüber Isocyanatgruppen reaktionsfähige Gruppen aufweisen. Die Polyether weisen ein aus der Funktionalität und dem Gehalt an funktionellen Gruppen errechenbares Molekulargewicht von 1000 bis 10 000, vorzugsweise 1000 bis 6000 auf. Bei den funktionellen Gruppen handelt es sich entweder um primäre bzw. sekundäre Hydroxylgruppen oder um aliphatisch bzw. aromatisch gebundene primäre oder sekundäre, vorzugsweise primäre Aminogruppen. Die als Komponente d) zum Einsatz gelangenden Polyether weisen im Sinne der Isocyanat-Additionsreaktion eine (mittlere) Funktionalität von 2 bis 8, vorzugsweise 2 bis 3 auf, wobei primäre Aminogruppen als monofunktionelle Gruppen in die Berechnung eingehen.

Geeignete Polyether d) sind beispielsweise solche, wie sie auf an sich bekannte Weise durch Anlagerung von Alkylenoxiden wie Ethylenoxid, Propylenoxid, Butylenoxid an Startermoleküle der oben unter b) beispielhaft genannten Art erhalten werden. Ebenfalls geeignet sind solche höhermolekularen Polyhydroxypolyether, in denen hochmolekulare Polyaddukte bzw. Polykondensate oder Polymerisate in feindisperser, gelöster oder aufgepfropfter Form vorliegen. Derartige modifizierte Polyhydroxylverbindungen werden z.B. erhalten, wenn man Polyadditionsreaktionen (z.B. Umsetzungen zwischen Polyisocyanaten und aminofunktionellen Verbindungen) bzw. Polykondensationsreaktionen (z.B. zwischen Formaldehyd und Phenolen und/oder Aminen) in situ in den Hydroxylgruppen aufweisenden Verbindungen ablaufen läßt. Derartige Verfahren sind beispielsweise in DE-AS 1 168 075 und 1 260 142, sowie DE-OS 2 324 134, 2 423 984, 2 512 385, 2 513 815, 2 550 796, 2 550 797, 2 550 833, 2 550 862, 2 633 293 und 2 639 254 beschrieben. Es ist aber auch möglich, gemäß US-PS 3 869 413 bzw. DE-OS 2 550 860 eine fertige wäßrige Polymerdispersion mit einem Polyhydroxypolyether zu vermischen und anschließend aus dem Gemisch das Wasser zu entfernen.

Auch durch Vinylpolymerisate modifizierte Polyhydroxypolyether, wie sie z.B. durch Polymerisation von Styrol und Acrylnitril in Gegenwart von Polyethern (US-Patentschriften 3 383 351, 3 304 273, 3 523 093, 3 110 695; DE-Auslegeschrift 1 152 536) erhalten werden, sind für das erfindungsgemäße Verfahren als Komponente d) geeignet. Bei Verwendung von Polyetherpolyolen, welche gemäß DE-OS 2 442 101, 2 644 922 und 2 646 141 durch Pfropfpolymerisation mit Vinylphosphonsäureestern sowie gegebenenfalls (Meth)acrylnitril. (Meth)acrylamid oder OH-funktionellen (Meth)acrylsäureestern modifiziert wurden, erhält man Kunststoffe von besonderer Flammwidrigkeit.

Vertreter der genannten erfindungsgemäß als Komponente d) zu verwendenden Verbindungen sind z.B. in High Polymers, Vol. XVI, "Polyurethanes, Chemistry and Technology", verfaßt von Saunders-Frisch, Interscience Publishers, New York, London, Band I, 1962, Seiten 32-42 und Seiten 44-54 und Band II, 1964, Seiten 5-6 und 198-199, sowie im Kunststoff-Handbuch, Band VII, Vieweg-Höchtlen, Carl-Hanser-Verlag, München, 1966, z.B. auf den Seiten 45-71, beschrieben.

Als Komponente d) geeignete Polyetheramine können aus den obengenannten Polyetherpolyolen nach bekannten Verfahren hergestellt werden. Beispielhaft genannt seien die Cyanoalkylierung von Polyoxyalkylen-polyolen und anschließende Hydrierung des gebildeten Nitrils (US-PS 3 267 050) oder die Aminierung von Polyoxyalkylenpolyolen mit Aminen oder Ammoniak in Gegenwart von Wasserstoff und Katalysatoren (DE-AS 1 215 373).

Ebenfalls als Komponente d) geeignet sind Polyetheramine, die aromatisch gebundene Aminogruppen tragen, welche mit der Polyetherkette über Urethan- oder Estergruppen verknüpft sind. Die Herstellung dieser Verbindungen erfolgt nach den Verfahren, die in EP-A 79 536, DE-OS 2 948 419, DE-OS 2 019 432, DE-OS 2 619 840, US-PS 3 808 250, US-PS 3 975 426 oder US-PS 4 016 143 beschrieben sind.

Bei der gegebenenfalls mitzuverwendenden Komponente e) handelt es sich um aromatische Diamine eines unter 500 liegenden Molekulargewichts. Das bevorzugte Molekulargewicht dieser Diamine liegt bei 108 bis 400. Beispiele sind 1,4-Diaminobenzol, 2,4-Diaminotoluol, 2,4'- und/oder 4,4'-Diaminodiphenylmethan oder vorzugsweise solche Diamine die zumindest in jeweils einer ortho-Stellung zu den Aminogruppen einen Alkylsubstituenten aufweisen, insbesondere um solche, die in ortho-Stellung zu der ersten Aminogruppe mindestens einen Alkylsubstituenten und in ortho-Stellung zur zweiten Aminogruppe zwei Alkylsubstituenten mit jeweils 1 bis 3 Kohlenstoffatomen aufweist, besonders bevorzugt um solche, die in jeweils mindestens einer ortho-Stellung zu den Aminogruppen einen Ethyl-, n-Propyl- und/oder Isopropylsubstituenten und gegebenenfalls in weiteren ortho-Stellungen zu den Aminogruppen Methylsubstituenten aufweisen. Zu diesen bevorzugten bzw. besonders bevorzugten Diaminen gehören 2,4-Diaminomesytylen, 1,3,5-Triethyl-2,4-diaminobenzol, 1,3,5-Triisopropyl-2,4-diaminobenzol, 1-Methyl-3,5-diethyl-2,4-diaminobenzol, dessen technischen Gemische mit 1-Methyl-3,5-diethyl-2,6-diaminobenzol, 4,6-Dimethyl-2-ethyl-1,3-diaminobenzol, 3,5,3',5'-Tetraethyl-4,4'-diaminodiphenylmethan, 3,5,3',5'-Tetraisopropyl-4,4'-diaminodiphenylmethan oder 3,5-Diethyl-3',5'-diisopropyl-4,4'-diaminodiphenylmethan. Beliebige Gemische derartiger aromatischer Diamine können ebenfalls eingesetzt werden.

Besonders bevorzugt werden als Komponente e) 1-Methyl-3,5-diethyl-2,4-diaminobenzol oder dessen technische Gemische mit bis zu 35 Gew.-%, bezogen auf Gesamtgemisch, an 1-Methyl-3,5-diethyl-2,6-diaminobenzol (DETDA) eingesetzt.

Als Katalysatoren f) kommen insbesondere tertiäre Amine der an sich bekannten Art in Frage, z.B.: Triethylamin, Tributylamin, N-Methyl-morpholin, N-Ethylmorpholin, N-Cocomorpholin, N,N,N',N'-Tetramethylethylendiamin, 1,4-Diazabicyclo-(2,2,2)-octan, N-Methyl-N'-dimethylaminoethylpiperazin, N,N-Dimethylcyclohexylamin, N,N,N',N'-Tetramethyl-1,3-butadiamin, N,N-Dimethylimidazol-β-phenylethylamin, 1,2-Dimethylimidazol und 2-Methyl-imidazol.

Auch organische Metallkatalysatoren, insbesondere organische Zinnkatalysatoren, wie z.B. Zinn-(II)-salze von Carbonsäure wie Zinn-(II)-acetat, Zinn-(II)-octoat, Zinn-(II)-ethylhexoat und Zinn-(II)-laurat und die Dialkylzinnsalze von Carbonsäuren, wie z.B. Dibutylzinndiacetat, Dibutyl-zinndilaurat, Dibutyl-zinnmaleat oder Dioctylzinndiacetat können allein oder in Kombination mit den tertiären Aminen verwendet werden. Weitere Verterter von Katalysatoren sowie Einzelheiten über die Wirkungsweise der Katalysatoren sind im Kunststoff-Handbuch, Band VII, herausgegeben von Vieweg & Höchtlen, Carl-Hanser-Verlag, München 1966, z.B. auf den Seiten 96 bis 102 beschrieben.

Vorzugsweise verwendet werden 0,01 bis 5 Gew.-%, insbesondere 0,05 bis 2 Gew.-% Katalysator bzw. Katalysatorkombination, bezogen auf die Summe des Gewichts der Komponenten b) bis g).

Zu den Hilfs- und Zusatzstoffen g), die gegebenenfalls mitverwendet werden, gehören beispielsweie Treibmittel, oberflächenaktive Substanzen, Schaumstabilisatoren sowie intern Formtrennmittel.

Geeignete Treibmittel sind beispielsweise Wasser, Methylenchlorid, Monofluorotrichlormethan, Dichlordifluormethan, Chlordifluormethan oder auch inerte Gase wie beispielsweise Stickstoff, Luft oder Kohlendioxid. Bei Verwendung von derartigen inerten Gasen erfolgt die "Gasbeladung" des Reaktionsgemisch dergestallt, daß man dem Gemisch aus den Komponenten b) bis e) mittels einer Venturidüse oder mittels eines Hohlrührers (gemäß DE-OS 3 244 037) das Gas in einer Menge von im allgemeinen mindestens 10 Vol.-%, vorzugsweise im allgemeinen von mindestens 20 Vol.-% (bezogen auf Normaldruck) einverleibt.

Als oberflächenaktive Substanzen kommen Verbindungen in Betracht, welche zur Unterstützung der Homogenisierung der Ausgangsstoffe dienen. Genannt sowie beispielsweise die Natriumsalze von Fettsäuren sowie Salze von Fettsäuren mit Aminen, z.B. ölsaures Diethylamin oder stearinsaures Diethanolamin.

Als Schaumstabilisatoren kommen vor allem wasserlösliche Polyethersiloxane in Frage. Diese Verbindungen sind im allgemeinen so aufgebaut, daß ein Copolymerisat aus Ethylenoxid und Propylenoxid mit einem Polydimethylsiloxanrest verbunden ist. Derartige Schaumstabilisatoren sind z.B. in der US-PS 2 764 565 beschrieben.

Die Menge der gegebenenfalls mitzuverwendenden Treibmittel, oberflächenaktiven Substanzen und Schaumstabilisatoren liegt im allgemeinen unterhalb 15, vorzugsweise bei maximal 10 Gew.-%, bezogen auf das Gesamtgewicht der Komponenten a) bis g).

Zu den gegebenenfalls mitzuverwendenden Hilfsmitteln g) gehören auch die an sich bekannten inneren Formtrennmittel, wie sie beispielsweise in DE-OS 1 953 637 (= US-PS 3 726 952), DE-OS 2 121 670 (= GB-PS 1 365 215), DE-OS 2 431 968 (US-PS 4 098 731) bzw. in DE-OS 2 404 310 (= US-PS 4 058 492) beschrieben sind. Bevorzugte Trennmittel sind die mindestens 25 aliphatische Kohlenstoffatome aufweisenden Salze von Fettsäuren mit mindestens 12 aliphatischen Kohlenstoffatomen und primären Mono-, Di- oder Polyaminen mit zwei und mehr Kohlenstoffatomen oder Amid- oder Estergruppen aufweisenden Aminen, die mindestens eine primäre, sekundäre oder tertiäre Aminogruppe besitzen, gesättigte und/oder ungesättigte COOH- und/oder OH-Gruppen aufweisende Ester von mono- und/oder polyfunktionellen Carbonsäuren und polyfunktionellen Alkoholen mit Hydroxyl- oder Säurezahlen von mindestens 5, esterartige Umsetzungsprodukte aus Ricinolsäure und langkettigen Fettsäuren, Salze aus Carbonsäuren und tertiären Aminen sowie natürliche und/oder synthetische Öle, fette oder Wachse.

Besonders bevorzugt sind das Ölsäure- oder Tallölfettsäuresalze des amidgruppenhaltigen Amins, das durch Umsetzung von N-Dimethylaminopropylamin mit Ölsäure oder Tallölfettsäure erhalten worden ist, bzw. das Salz aus 2 Mol Ölsäure und 1 Mol 1,4-Diaza-bicyclo-(2,2,2)-octan.

Neben diesen beispielhaft genannten, bevorzugt einzusetzenden Trennmitteln können prinzipiell beim erfindungsgemäßen Verfahren auch andere an sich bekannte Trennmittel des Standes der Technik allein oder im Gemisch mit den bevorzugten, beispielhaft genannten Trennmitteln eingesetzt werden. Zu diesen weiterhin geeigneten Trennmitteln gehören beispielsweise die Umsetzungsprodukte aus Fettsäureestern und Polyisocyanaten gemäß DE-AS 2 307 589, die Umsetzungsprodukte aus reaktionsfähige Wasserstoffatome aufweisenden Polysiloxanen mit Mono- und/oder Polyisocyanaten gemäß DE-OS 2 356 692 (= US-PS 4 033 912), Ester von Hydroxymethylgruppen aufweisenden Polysiloxanen mit Mono- und/oder Polycarbonsäuren gemäß DE-OS 2 363 452 (= US-PS 4 024 090) und Salze aus Aminogruppen enthaltenden Polysiloxanen und Fettsäuren gemäß DE-OS 2 427 273 oder DE-OS 2 431 968 (US-PS 4 098 731).

Die genannten internen Formtrennmittel werden, falls überhaupt, in einer Menge von insgesamt bis zu 15 Gew.-%, vorzugsweise bis zu 10 Gew.-%, bezogen auf das gesamte Reaktionsgemisch, eingesetzt.

Weitere, gegebenenfalls mitzuverwendende Zusatzstoffe g) sind beispielsweise Füllstoffe, Farbstoffe, Pigmente und Flammschutzmittel.

Als Füllstoffe, insbesondere verstärkend wirkende Füllstoffe, seien beispielhaft genannt: silikatische Mineralien, beispielsweise Schichtsilikate wie Antigorit, Serpentin, Hornblenden, Amphibile, Chrisotil, Talkum; Metalloxide, wie Kaolin, Aluminiumoxide, Titanoxide und Eisenoxide, Metallsalze wie Kreide, Schwerspat und anorganische Pigmente, wie Cadmiumsulfid, Zinksulfid sowie Glas, Asbestmehl u.a. Vorzugsweise verwendet werden natürliche und synthetische faserförmige Mineralien wie Asbest, Wollastonit und insbesondere Glasfasern verschiedener Länge, die gegebenenfalls geschlichtet sein können.

Füllstoffe können einzeln oder als Gemische verwendet werden.

Die Füllstoffe werden, falls überhaupt, der Reaktionsmischung vorteilhafterweise in Mengen von bis zu 50 Gew.-%, vorzugsweise bis zu 30 Gew.-%, bezogen auf das Gewicht der Komponenten b) bis g), zugegeben.

Geeignete Flammschutzmittel sind beispielsweise Trikresylphophat, Tris-2-chlorethylphosphat, Trischlorpropylphosphat und Tris-2,3-dibrompropylphosphat.

Außer den bereits genannten halogensubstituierten Phosphaten können auch anorganische Flammschutzmittel, wie Aluminiumoxidhydrat, Ammoniumpolyphosphat und Calciumsulfat verwendet werden. Im allgemeinen hat es sich als zweckmäßig erwiesen, bis zu 25 Gew.-% der genannten Flammschutzmittel, bezogen auf die Summe der Komponenten b) bis g) zu verwenden.

Weitere, gegebenenfalls mitzuverwendende "Zusatzstoffe" g) sind einwertige Alkohole wie Butanol, 2-Ethylhexanol, Octanol, Dodecanol oder Cyclohexanol, die gegebenenfalls zwecks Herbeiführung eines gewünschten Kettenabbruchs mit verwendet werden können. Im allgemeinen liegen in den Reaktionsgemischen jedoch keine derartigen einwertigen Alkohole vor.

Nähere Angaben über die üblichen Hilfs- und Zusatzstoffe sind der Fachliteratur, beispielsweise der Monographie von J.H. Saunders und K.C. Frisch "High Polymers" Band XVI, Polyurethanes, Teil 2 und 2, Verlag Interscience Publishers 1962 bzw. 1984, zu entnehmen.·

Zur Durchführung des erfindungsgemäßen Verfahrens werden die Komponenten b) bis e) zu einer "Polyolkomponente" abgemischt, die dann mit der Polyisocyanatkomponente a) nach der Reaktionsspritzgußtechnik verarbeitet wird. Die Katalysatoren f) und die gegebenenfalls mitzuverwendenden Hilfs- und Zusatzmittel g) werden im allgemeinen der "Polyolkomponente" bzw. einer oder mehreren der Komponenten b) bis e) vor der Herstellung der "Polyolkomponente" zugesetzt, jedoch ist dies nicht zwingend erforderlich, da mit der Polyisocyanatkomponente a) verträgliche Katalysatoren bzw. Hilfs- und Zusatzmittel auch dieser einverleibt werden können.

Bei der Herstellung der "Polyolkomponente" aus den Einzelbestandteilen b) bis e) werden im übrigen Art und Mengenverhältnisse dieser Einzelbestandteile vorzugsweise so gewählt, daß

(i) der Anteil der Komponente b), bezogen auf das Gesamtgewicht der Komponenten b) bis e), mindestens 10 Gew.-%, vorzugsweise mindestens 20 Gew.-%, ausmacht,

(ii) der Anteil der Komponente c), bezogen auf das Gesamtgewicht der Komponenten b) bis e), 10 bis 60, vorzugsweise 20 bis 40 Gew.-%, ausmacht,

(iii) der Anteil der gegebenenfalls mitzuverwendenden Komponente d), bezogen auf das Gesamtgewicht der Komponenten b) bis e), bis zu 40, vorzugsweise bis zu 25 Gew.-%, ausmacht,

(iv) die Menge der gegebenenfalls mitzuverwendenden Komponente (e), bezogen auf das Gesamtgewicht der Komponenten b) bis e), maximal 10 Gew.-% ausmacht, und

(v) die mittlere Hydroxylzahl der "Polyolkomponente" größer als 300, vorzugsweise größer als 400 mg KOH/g beträgt.

Im Falle des Vorliegens von primäre und/oder sekundäre Aminogruppen aufweisenden Aufbaukomponenten d) und/oder e) umfaßt die genannte "Hydroxylzahl" auch die "Aminzahl" bzw. "NH-Zahl" dieser Aufbaukomponenten, die ebenfalls wie die echte Hydroxylzahl titrimetrisch bestimmbar ist und ebenfalls in "mg KOH/g" angegeben wird und daher der echten Hydroxylzahl äquivalent und mit dieser austauschbar ist.

Für das erfindungsgemäße Verfahren ist ein gewisser Verzweigungsgrad der Ausgangsmaterialien erforderlich, der im wesentlichen durch die spezielle Auswahl von Komponente (c) erreicht wird. So sollte bei der Verwendung von difunktionellen Polyisocyanaten, d.h. von Diisocyanaten als Komponente a), die mittlere Funktionalität der "Polyolkomponente" vorzugsweise bei mindestens 2,30 liegen. Unter Zugrundelegung einer Isocyanatkennzahl von 100 sollte die mittlere Funktionalität aller Aufbaukomponenten, d.h. das arithmetische Mittel der Funktionalität der Komponente a) und der mittleren Funktionalität der "Polyolkomponente" vorzugsweise bei mindestens 2,15 liegen.

Die Mengenverhältnisse der Reaktionskomponenten werden im übrigen bei der Durchführung des erfindungsgemäßen Verfahrens vorzugsweise so bemessen, daß im Reaktionsgemisch eine Isocyanat-Kennzahl von 70 bis 130, insbesondere von 90 bis 110 vorliegt. Unter Isocyanat-Kennzahl versteht man hierbei den Quotienten aus Anzahl der Isocyanatgruppen und Anzahl der gegenüber Isocyanaten reaktiven Gruppen, multipliziert mit 100.

Das bei der Durchmischung der Reaktionskomponenten entstehende Gemisch wird in die jeweilige Form eingebracht. Die Menge des gegebenenfalls mitverwendeten Treibmittels und die Menge des in die Form eingetragenen Gemischs wird so bemessen, daß die Formkörper eine Dichte von 0,8 bis 1,4, vorzugsweise von 0,9 bis 1,2 und insbesondere von 1,0 bis 1,18 g/cm³ aufweisen. Insbesondere bei Mitverwendung von mineralischen Füllstoffen können Formkörper einer über 1,2 g/cm³ liegenden Dichte resultieren. Bei den erfindungsgemäß erhältlichen Formkörpern handelt es sich im allgemeinen um mikrozellulare Kunststoffe, obwohl bei völligem Befüllen der Form, insbesondere ohne Mitverwendung von Treibmitteln und/oder inerten Gasen wie z. B. von Luft, auch die Herstellung von massiven Formkörpern möglich ist. Die Formkörper können im allgemeinen nach einer Formzeit von 30 bis 180, vorzugsweise 60 bis 90 Sekunden, entformt werden.

Als Ausgangstemperatur des in die Form eingebrachten Gemisches wird im allgemeinen der Bereich von 20 bis 80, vorzugsweise 30 bis 50°C, gewählt. Die Temperatur der Form beträgt im allgemeinen 40 bis 100, vorzugsweise 50 bis 70°C.

Das erfindungsgemäße Verfahren eignet sich insbesondere zur Herstellung hochwertiger steifer Formkörper mit guter Schlagzähigkeit, z.B. technischer Gehäuse oder Geräteteile.

In den nachfolgenden Beispielen beziehen sich alle Prozentangaben auf Gewichtsprozente.

Beispiele

Die Verarbeitung der in den nachstehenden Beispielen I bis IV eingesetzten Reaktionskomponenten erfolgte mit Hilfe der Reaktionsspritzgußtechnik (RSG). Die Aufbaukomponenten b) bis e) mit gegenüber Isocyanatgruppen reaktionsfähigen Gruppen wurden vorab unter Einbeziehung der Hilfs- und Zusatzmittel jeweils zu einer "Polyolkomponente" vereinigt und mit der Polyisocyanatkomponente e) unter Einhaltung einer Isocyanatkennzahl von 110 verarbeitet. Hierzu werden die Reaktivkomponenten, die bei einer Temperatur von 30°C gehalten werden, einem Hochdruckaggregat zugeführt und nach intensiver Vermischung in einem zwangsgesteuerten Mischkopf in das Metallwerkzeug gedrückt.

Das Werkzeug, ein Plattenwerkzeug aus Aluminium, welches vor Befüllen eine Temperatur von 60°C aufweist, und dessen Innenwände vor Befüllen mit einem äußeren Formtrennmittel (®Acmosil 180 der Firma Acmos Chem. Fabrik, Postfach 101069, D-2800 Bremen 1) beschichtet worden sind, erlaubt die Herstellung von Formteilen mit folgenden Abmessungen:

Länge: 1000 mm
Breite: 500 mm
Dicke: 4 mm
Anguß: Staubalken

Rohstoffe

Polyisocyanatkomponente a):

Polyisocyanatgemisch der Diphenylmethanreihe, hergestellt durch Phosgenierung eines Anilin/Formaldehyd-Kondensats.
NCO-Gehalt: 31%
mittlere NCO-Funktionalität: 2,4
Viskosität (25°C): 130 mPa.s

EP 0 265 781 B1

Komponente b):

Ethoxylierungsprodukt von Trimethylolpropan.
Molekulargewicht: 672, Funktionalität: 3

Komponente c1):

Propoxylierungsprodukt von Trimethylolpropan.
Molekulargewicht: 165, Funktionalität: 3

Komponente c2):

Propoxylierungsprodukt von Ethylendiamin.
Molekulargewicht: 280, Funktionalität: 4

Komponente d):

Polyetherpolyol hergestellt durch Alkoxylierung von Trimethylolpropan unter Verwendung eines Gemischs aus Propylenoxid und Ethylenoxid im Molverhältnis 75:15 und anschließende Propoxylierung des Alkoxylierungsprodukts unter Verwendung von 10 Mol.-% Propylenoxid, bezogen auf die Gesamtzahl der Mole der eingesetzten Alkylenoxide. Molekulargewicht: 3660, Funktionalität: 3

Komponente d):

Gemisch aus 30% 1-Methyl-3,5-diethyl-2,6-diaminobenzol und 70% 1-Methyl-3,5-diethyl-2,4-diaminobenzol. NH-Zahl: 630

Komponente f1):

Triethylendiamin.

Komponente f2):

Dimethylzinn(IV)dilaurat.

Komponente g):

Umsetzungsprodukt aus 2 Mol Tallöl und 1 Mol N,N-Dimethylamino-propylamin entsprechend DE-OS 1 953 637 (wirkt als Emulgator und internes Trennmittel).

7

| Rezeptur | Dimension | I | II | III | IV | V (Vergleich) |
|---|---|---|---|---|---|---|
| Komponente b) | Gew.-Tle. | 69,73 | 59,78 | 69,94 | 26,32 | - |
| Komponente c1) | " | 19,92 | 29,87 | - | 25,70 | 36,34 |
| Komponente c2) | " | - | - | 29,54 | 10,00 | - |
| Komponente d) | " | - | - | - | 25,6 | 53,27 |
| Komponente e) | " | 9,97 | 9,97 | - | 5,00 | 9,96 |
| Komponente f1) | | 0,33 | 0,33 | 0,33 | 0,33 | 0,33 |
| Komponente f2) | | 0,05 | 0,05 | 0,19 | 0,05 | 0,10 |
| Komponente g) | | - | - | - | 7,00 | - |
| OHZ* | - | 442 | 520 | 408 | 453 | 461 |
| Komponente a) | Gew.-Tle. | 117 | 138 | 108 | 120 | 123 |
| NKS-Schlagzähigkeit DIN 53453 | $kJ/m^2$ | 59 | 42 | 86 | 46 | 49 |
| NKS-Kerbschlagzähigkeit DIN 53453 | $kJ/m^2$ | 8,5 | 6,9 | 9,3 | 7,0 | 7,4 |
| Biege-E-Modul DIN 53457 | $N/mm^2$ | 2276 | 2270 | 2100 | 2000 | 1600 |

*) mittlere OH-Zahl der Komponenten b) bis e)

EP 0 265 781 B1

**Patentansprüche**

1. Verfahren zur Herstellung von schlagzähen Polyurethan-Formkörpern des Dichtebereichs 0,8 bis 1,4 g/cm³ und eines Biege-E-Moduls gemäß DIN 53 457 von mindestens 1800 N/mm² durch Umsetzung nach der Reaktionsspritzgußtechnik von

a) Di- und/oder Polyisocyanaten der Diphenylmethanreihe
mit
b) Polyetherpolyolen des Molekulargewichtsbereichs 500 bis 999,
c) organischen Polyhydroxylverbindungen mit einem Molekulargewicht von maximal 499
und gegebenenfalls
d) Polyethern mit mindestens zwei gegenüber Isocyanatgruppen reaktionsfähigen Gruppen des Molekulargewichtsbereichs 1000 bis 10 000 und/oder
e) aromatischen Diaminen eines unter 500 liegenden Molekulargewichts
in Gegenwart von
f) die Isocyanat-Additionsreaktion beschleunigenden Katalysatoren
und gegebenenfalls in Gegenwart von
g) den aus der Polyurethanchemie bekannten Hilfs- und Zusatzstoffen,
dadurch gekennzeichnet, daß man
(i) als Komponente b) solche Polyetherpolyole verwendet, die mindestens 30 Gew.-% an in Polyetherketten eingebaut vorliegenden Ethylenoxideinheiten aufweisen,
(ii) als Komponente c) solche Polyhydroxylverbindungen verwendet, die aus der Gruppe bestehend aus Glycerin, Trimethylolpropan, Hexantriol-(1,2,6), Trimethylolethan, Pentaerythrit, Chinit, Mannit, Sorbit, Additionsprodukten dieser Verbindungen mit Propylenoxid und/oder Ethylenoxid und Propylenoxid- und/oder Ethylenoxidaddukten an Ammoniak oder Amine ausgewählt worden sind,
(iii) die Komponente d) in einer Menge von 0 bis 40 Gew.-%, bezogen auf das Gewicht der Komponenten b) bis d), verwendet und
(iv) die Art und Mengenverhältnisse der Komponenten b) bis e) im übrigen so wählt, daß die mittlere Hydroxylzahl des aus diesen Komponenten gebildeten Gemischs größer als 300 ist.

2. Verfahren gemäß Anspruch 1, dadurch gekennzeichnet, daß man
(i) die Komponente b) in einer Menge von mindestens 20 Gew.-%, bezogen auf das Gesamtgewicht der Komponenten b) bis e) und
(ii) die Komponente e) in einer Menge von maximal 10 Gew.-%, bezogen auf das Gesamtgewicht der Komponenten b) bis e) verwendet.

**Claims**

1. A process for the production of high-impact polyurethane mouldings having a density in the range from 0.8 to 1.4 g/cm³ and a modulus of elasticity in bending according to DIN 53 457 of at least 1800 N/mm² by reaction of

a) di- and/or polyisocyanates of the diphenyl methane series
with
b) polyether polyols having a molecular weight in the range from 500 to 999,
c) organic polyhydroxyl compounds having a molecular weight of at most 499
and optionally
d) polyethers containing at least two-isocyanate-reactive groups and having a molecular weight in the range from 1,000 to 10,000 and/or
e) aromatic diamines having a molecular weight below 500 in the presence of
f) catalysts which accelerate the isocyanate addition reaction
and optionally in the presence of
g) the auxiliaries and additives known from polyurethane chemistry using the reaction injection moulding technique, characterized in that
(i) component b) is a polyether polyol containing at least 30% by weight ethylene oxide units incorporated in polyether chains,
(ii) component c) is a polyhydroxyl compound selected from the group consisting of glycerol, trimethylol propane, hexane-1,2,6-triol, trimethylol ethane, pentaerythritol, quinitol, mannitol, sorbitol, adducts of these compounds with propylene oxide and/or ethylene oxide and adducts of propylene oxide and/or ethylene oxide with ammonia or amines,
(iii) component d) is used in a quantity of 0 to 40% by weight, based on the weight of components b) to d), and
(iv) the nature of components b) to e) and the quantities in which they are used are selected so that the average hydroxyl value of the mixture formed from these components is greater than 300.

2. A process as claimed in claim 1, characterized in that
(i) component b) is used in a quantity of at least 20% by weight, based on the total weight of components b) to e), and

(ii) component e) is used in a quantity of at most 10% by weight, based on the total weight of components b) to e).

## Revendications

1. Procédé pour la fabrication d'objets moulés résilients en polyuréthannes, à un intervalle de densité de 0,8 à 1,4 g/cm³, avec un module d'élasticité à la flexion selon norme allemande DIN 53 457 d'au moins 1800 N/cm² par réaction selon la technique de moulage réactif par injection de:
   a) des di- et/ou poly-isocyanates de la série du diphénylméthane,
   avec
   b) des polyéther-polyols de poids moléculaire 500 à 999,
   c) des composés organiques polyhydroxylés de poids moléculaire 499 au maximum et le cas échéant
   d) des polyéthers contenant au moins deux groupes réactifs avec les groupes isocyanate, à un poids moléculaire dans l'intervalle de 1000 à 10 000, et/ou
   e) des diamines aromatiques de poids moléculaire inférieur à 500,
   en présence de
   f) des catalyseurs accélérant la réaction d'addition des isocyanates,
   et le cas échéant en présence de:
   g) les produits auxiliaires et additifs connus de la chimie des polyuréthannes, caractérisé en ce que:
      (i) on utilise en tant que composant b) des polyétherpolyols contenant au moins 30% en poids de motifs d'oxyde d'éthylène dans les chaînes de polyéther,
      (ii) on utilise en tant que composant c) des composés polyhydroxylés choisis dans le groupe consistant en le glycérol, le triméthylolpropane, l'hexane-triol-1,2,6, le triméthyloloéthane, le pentaérythritol, le quinit ol, le mannitol, le sorbitol, les produits d'addition de ces composés avec l'oxyde de propylène et/ou l'oxyde d'éthylène, et les adducts de l'oxyde de propylène et/ou de l'oxyde d'éthylène sur l'ammoniac ou des amines,
      (iii) on utilise le composant d) en quantité de 0 à 40% en poids, par rapport au poids des composants b) à d), et
      (iv) on choisit par ailleurs la nature et les proportions des composants b) à e) en sorte que l'indice d'hydroxyle moyen du mélange formé à partir de ces composants soit supérieur à 300.

2. Procédé selon la revendication 1, caractérisé en ce que:
   (i) on utilise le composant b) en quantité d'au moins 20% en poids par rapport au poids total des composants b) à e), et
   (ii) on utilise le composant e) en quantité de 10% en poids au maximum par rapport au poids total des composants b) à e).